# DEMANDE DE BREVET EUROPEEN

(11) **EP 1 333 232 A1**
(43) Date de publication de la demande: **06.08.2003**
(21) Numéro de dépôt: 03356017.8
(22) Date de dépôt: 03.02.2003
(51) Int. Cl.: F24C 15/20, F24F 7/06

(54) **Procédé et dispositif pour la régulation de la ventilation de cuisines professionnelles**

(30) Priorité: 04.02.2002 FR 0201299
(71) Demandeur: FRANCE AIR S.A., F-01700 Miribel (FR)
(72) Inventeur: Margrita, Jean-Philippe, 69330 Meyzieu (FR)
(74) Mandataire: Bratel, Gérard

(57) **Abrégé**

Le procédé assure le pilotage d'un débit d'air d'extraction (D1), et le cas échéant d'un débit d'air d'induction (D2) et/ou d'un débit d'air d'insufflation (D3), au niveau d'une hotte de cuisine surmontant des appareils de cuisson (3). Chaque débit d'air (D1, D2, D3) est déplacé par un ventilateur (10, 16, 23) entraîné en rotation par un moteur électrique (11, 17, 24) à vitesse variable. Plusieurs mesures de températures (T1, T2, T3) sont effectuées par des sondes (31), placées à proximité des appareils de cuisson (3). La valeur moyenne (Tm) de ces températures, et éventuellement leur écart-type, sont automatiquement calculés. La vitesse de rotation (V) des moteurs (11, 17, 24) est automatiquement réglée en fonction de la température moyenne (Tm) et éventuellement de l'écart-type, et en tenant compte aussi, éventuellement, des signaux fournis par d'autres capteurs (33, 34). L'invention s'applique aux hottes de cuisines professionnelles.

## Description

La présente invention concerne un procédé pour la régulation de la ventilation de cuisines professionnelles, ainsi qu'un dispositif de régulation mettant en oeuvre ce procédé.

Concrètement, ce procédé et ce dispositif assurent la gestion des débits d'air des hottes au plafonds filtrants de cuisines professionnelles, qui sont habituellement installées au-dessus d'un plan de cuisson ou d'appareils de cuisson, et qui assurent de façon généralement connue la ventilation et le désenfumage de ces cuisines. Le terme "cuisine" désigne ici tout lieu de préparation des aliments, que ceux-ci soient consommés sur place, par exemple dans un restaurant attenant à la cuisine, ou en autre lieu plus ou moins éloigné. Quant aux appareils de cuisson concernés, ceux-ci peuvent être de toutes sortes (réchauds, plaques de cuisson, friteuses, fours, etc...) et utiliser tout type d'énergie de chauffage : gaz, combustible solide (tel que bois), électricité ou vapeur.

De manière connue, la notion générale de ventilation de cuisines professionnelles englobe plusieurs fonctions particulières de mise en circulation de l'air, notamment les fonctions dites d'extraction, d'induction et d'insufflation.

L'extraction consiste en l'aspiration de l'air et des fumées, présents sous la hotte, et à leur évacuation forcée vers l'extérieur de la cuisine.

L'induction consiste en l'injection d'air neuf non traité, au niveau de la hotte, pour favoriser l'entraînement des fumées à évacuer.

L'insufflation, aussi désignée par "compensation", consiste en l'apport d'air, éventuellement traité (c'est-à-dire climatisé et/ou filtré), directement dans la cuisine, ceci notamment pour compenser la quantité d'air prélevée dans la même cuisine par l'extraction.

La fonction d'extraction d'air est existante dans tous les cas de ventilation de cuisines. Les autres fonctions, à savoir l'induction et l'insufflation d'air, sont souhaitables mais conservent un caractère complémentaire et facultatif.

Les fonctions d'extraction, et le cas échéant d'induction et/ou d'insufflation d'air, sont assurées habituellement au moyen de ventilateurs, entraînés en rotation par des moteurs électriques eux-mêmes pilotés par des variateurs, de manière à déplacer des débits d'air variables.

Les solutions techniques actuelles utilisent des moteurs électriques pilotés par des variateurs de fréquence, ce qui conduit à des réalisations particulièrement coûteuses. La régulation est effectuée à partir de capteurs, principalement des capteurs d'humidité qui sont sujets à l'encrassement et délicats à nettoyer.

La présente invention vise à éliminer ces inconvénients en fournissant, pour la régulation de la ventilation de cuisines professionnelles, une solution améliorant le pilotage et l'efficacité des fonctions d'extraction d'air, et le cas échéant d'induction et d'insufflation d'air, en les adaptant exactement aux besoins instantanés de manière à permettre des économies d'énergie substantielles, et un fonctionnement adapté à chacune des phases de la préparation culinaire.

A cet effet, l'invention a premièrement pour objet un procédé pour la régulation de la ventilation de cuisines professionnelles, avec pilotage d'un débit d'air d'extraction, et le cas échéant d'un débit d'air d'induction et/ou d'un débit d'air d'insufflation, le ou chaque débit d'air étant déplacé par un ventilateur entraîné en rotation par un moteur électrique à vitesse de rotation variable, ce procédé de régulation étant caractérisé essentiellement par le fait que plusieurs mesures de température sont effectuées, à proximité des appareils de cuisson de la cuisine concernée, qu'au moins une valeur résultante de l'ensemble des températures mesurées est calculée, et que la vitesse de rotation du ou des moteurs électriques d'entraînement du ou des ventilateurs est automatiquement réglée en fonction de la valeur résultante calculée.

Selon un mode de mise en oeuvre simple de l'invention, la valeur résultante calculée, et prise en compte pour la régulation de la vitesse du ou des moteurs électriques d'entraînement de ou des ventilateurs, est la valeur moyenne des températures mesurées.

Selon un mode de mise en oeuvre préféré du procédé objet de l'invention, l'écart-type des températures mesurées est aussi calculé, cet écart-type est comparé avec une valeur de seuil préétablie, et lorsque l'écart-type calculé est supérieur à la valeur de seuil, le ou les moteurs électriques d'entraînement du ou des ventilateurs sont commandés à leur vitesse de rotation maximum, cette commande de ventilation maximum étant maintenue pendant une durée minimum préétablie.

Ainsi, le procédé objet de l'invention permet d'ajuster automatiquement le niveau de ventilation en fonction de l'utilisation de la cuisine, avec variation instantanée des débits d'air d'extraction, et le cas échéant d'air d'induction et d'air d'insufflation, en fonction des besoins. En particulier, plus la température moyenne calculée augmente, plus le débit d'air d'extraction augmente, les débits étant au contraire réduits lorsque les besoins de ventilation sont moins élevés, ce qui permet de réduire les coûts de chauffage et de traitement de l'air, et de diminuer aussi les nuisances sonores de la ventilation. De plus, le calcul de l'écart-type des températures mesurées (dans le cas où ce calcul est prévu) permet de détecter une variation d'une seule des températures mesurées, et de la prendre en compte.

Selon un mode de mise en oeuvre particulier de ce procédé, l'on détecte aussi l'ouverture d'au moins un four, faisant partie des appareils de cuisson, et/ou la différence de pression entre l'extérieur et l'intérieur de la cuisine concernée, et le ou les moteurs électriques d'entraînement du ou des ventilateurs sont aussi commandés à leur vitesse de rotation maximum, pendant la durée minimum préétablie, en cas de détection d'une ouverture de four et/ou d'une pression d'air excessive dans la cuisine. Ainsi, un dégagement de vapeur consécutif à l'ouverture du four est automatiquement pris en compte par une accélération de l'extraction ; de même, une ouverture de porte ou de fenêtre, augmentant la pression (la cuisine étant normalement en légère dépression), est détectée et immédiatement compensée, pour éviter les risques de refoulement de vapeurs et d'odeurs, notamment vers une salle de restaurant attenante à la cuisine. Le procédé adapte donc aussi automatiquement la ventilation à des circonstances particulières, rencontrées dans la pratique.

Les dispositions fonctionnelles définies ci dessus concernent essentiellement le fonctionnement en régime continu du système de ventilation de la cuisine concernée. En complément, l'invention prévoit aussi qu'à la mise en route du système de ventilation de ladite cuisine, le ou les moteurs électriques d'entraînement du ou des ventilateurs sont automatiquement commandés à leur vitesse de rotation maximum, cette commande de ventilation maximum étant maintenue pendant une durée préétablie. Ainsi, on s'assure du démarrage certain du ou des moteurs.

Le dispositif selon l'invention, pour la régulation de la ventilation de cuisines professionnelles, mettant en oeuvre le procédé défini ci-dessus, comprend essentiellement une unité de contrôle incluant, d'une part, un automate possédant des entrées reliées à une pluralité de sondes de température placées à proximité des appareils de cuisson de la cuisine concernée, l'automate étant prévu pour calculer une valeur résultante, telle que la valeur moyenne, des températures mesurées par les différentes sondes, et d'autre part, pour piloter le ou chaque moteur électrique d'entraînement du ou des ventilateurs, un variateur électronique de vitesse recevant une valeur de consigne de vitesse délivrée à une sortie de l'automate.

L'unité de contrôle peut ainsi comprendre un premier variateur de vitesse pilotant le moteur électrique d'une unité d'extraction d'air, un deuxième variateur de vitesse pilotant le moteur électrique d'une unité d'induction d'air, et un troisième variateur de vitesse pilotant le moteur électrique d'une unité d'insufflation d'air. Le ou les variateurs de vitesse, pilotant le ou les moteurs électriques, sont avantageusement des variateurs de tension d'alimentation de ces moteurs.

Les sondes de températures sont avantageusement placées, à proximité des appareils de cuisson, dans la partie inférieure d'une hotte de cuisine surmontant lesdits appareils de cuisson.

L'automate est de préférence prévu pour calculer aussi l'écart-type des températures mesurées par les différentes sondes, pour comparer l'écart-type calculé avec une valeur de seuil préétablie, et pour délivrer une valeur de consigne de vitesse dépendant aussi du résultat de cette comparaison.

L'automate peut aussi posséder une entrée reliée à un capteur d'ouverture de four, et/ou une entrée reliée à un capteur de pression ou à un pressostat différentiel, placé dans la cuisine, l'automate délivrant dans ce cas un signal de consigne de vitesse qui dépend aussi des signaux issus de ces capteurs additionnels.

Enfin, l'automate peut être relié aussi à un boîtier de commande déporté, utilisable pour une commande manuelle de certaines fonctions.

L'invention sera de toute façon mieux comprise à l'aide de la description qui suit, en référence au dessin schématique annexé représentant, à titre d'exemple, une forme d'exécution de ce dispositif pour la régulation de la ventilation de cuisines professionnelles :
Figure 1 est une vue d'ensemble très schématique, en coupe verticale, d'une cuisine équipée du dispositif objet de l'invention ;
Figure 2 est un schéma synoptique du dispositif de régulation de ventilation, équipant par exemple la cuisine de la figure 1 ;
Figure 3 illustre une variante d'application de ce dispositif.

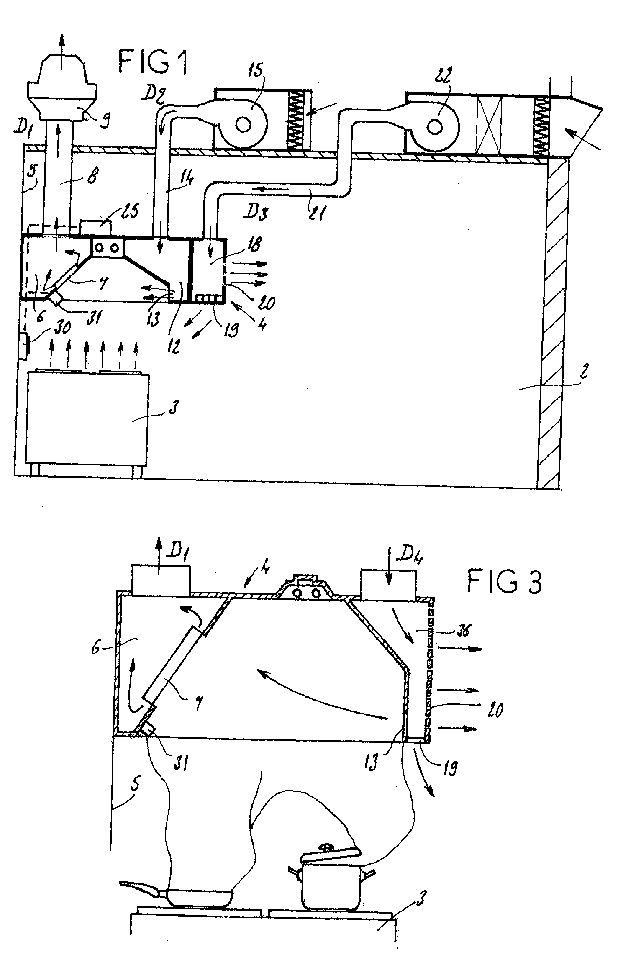

En se référant d'abord à la figure 1, il est représenté très schématiquement une cuisine professionnelle, désignée globalement par le repère 2, dans laquelle est installée une série d'appareils de cuisson 3, lesquels sont surmontés par une hotte de cuisine 4, par exemple adossée à un mur 5.

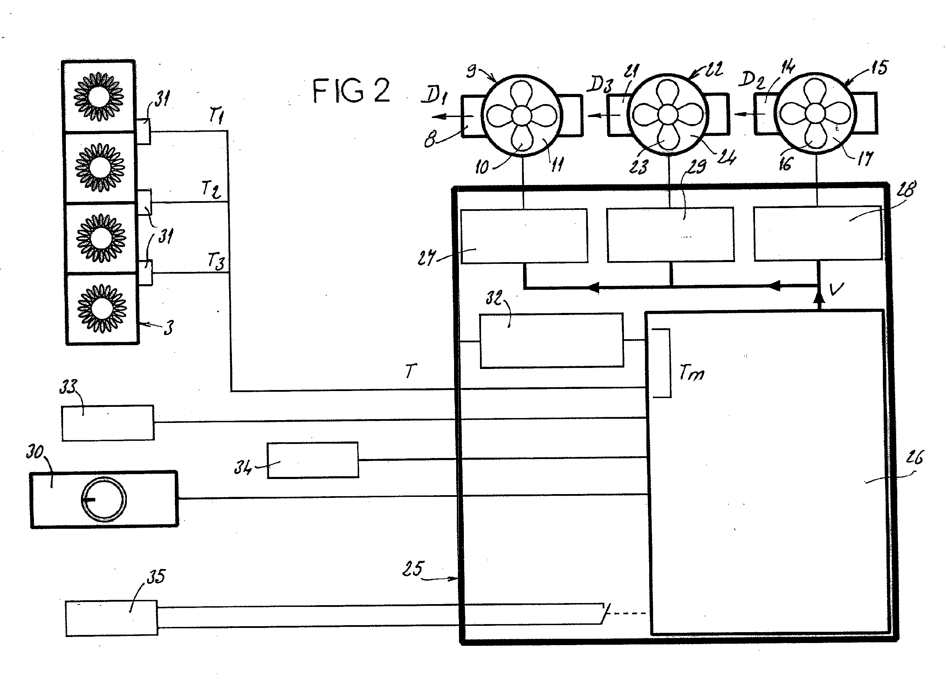

La hotte 4 possède un plénum ou caisson d'aspiration 6, dont l'entrée, située au-dessus des appareils de cuisson 3, comporte un filtre 7. La partie haute du caisson d'aspiration 6 est reliée, par un conduit d'extraction 8, à une unité motorisée d'extraction 9. En se référant aussi à la figure 2, l'unité d'extraction 9 comporte un ventilateur 10, entraîné en rotation par un moteur électrique 11 à une vitesse variable.

La hotte 4 possède aussi, du côté opposé au caisson d'aspiration 6, un plénum ou caisson d'induction 12, avec une ouverture de sortie 13 dirigée vers l'entrée du caisson d'aspiration 6. La partie haute du plénum ou caisson d'induction 12 est reliée, par un conduit 14, à une unité motorisée d'induction 15. En se référant aussi à la figure 2, l'unité d'induction 15 comporte un ventilateur 16, entraîné en rotation par un moteur électrique 17 à vitesse variable.

La hotte 4 possède encore un plénum ou caisson d'insufflation 18, accolé au plénum ou caisson d'induction 12, et possédant des ouvertures de sortie 19, 20 situées sur sa face inférieure, d'une part, et sur sa face extérieure tournée vers le milieu de la cuisine 2, d'autre part. La partie haute du plénum ou caisson d'insufflation 18 est reliée, par un conduit 21, à une unité motorisée d'insufflation 22. En se référant aussi à la figure 2, l'unité d'insufflation 22 comporte un ventilateur 23, entraîné en rotation par un moteur électrique 24 à vitesse variable.

Le dispositif de régulation de ventilation, associée aux éléments précédemment décrits, assure la gestion des divers débits d'air de la hotte 4, c'est-à-dire le réglage des débits d'air D1, D2, D3 déplacés respectivement par l'unité d'extraction 9, par l'unité d'induction 15 et par l'unité d'insufflation 22, en fonction de signaux délivrés par divers capteurs.

Ce dispositif de régulation comprend un boîtier de contrôle 25, qui est placé par exemple au-dessus de la hotte 4 (voir figure 1), et qui contient notamment, comme représenté schématiquement sur la figure 2 :
- un automate programmable 26 ;
- un premier variateur électronique de vitesse 27, tel qu'un variateur de tension, qui pilote le moteur électrique 11 de l'unité d'extraction 9 ;
- un deuxième variateur électronique de vitesse 28, tel qu'un variateur de tension, qui pilote le moteur électrique 17 de l'unité d'induction 15 ;
- un troisième variateur électronique de vitesse 29, tel qu'un variateur de tension, qui pilote le moteur électrique 24 de l'unité d'insufflation 22.

L'automate 26 possède une sortie de consigne de vitesse V, reliée aux entrées respectives des trois variateurs 27, 28 et 29.

Le boîtier de contrôle 25 est relié à un boîtier de commande déporté 30, pour la sélection manuelle du mode de fonctionnement, notamment avec des positions "arrêt" et "marche automatique", éventuellement avec une gradation entre une position "minimum" et une position "maximum". Le boîtier de commande 30 est placé en un lieu accessible pour le cuisinier, par exemple sur le mur 5 de la cuisine 2, à proximité des appareils de cuisson 3 (voir figure 1, à gauche).

Le boîtier de contrôle 25 est aussi relié à une pluralité de sondes de température 31, placées à proximité des appareils de cuisson 3, par exemple dans la partie inférieure de la hotte 4 juste au-dessus de ces appareils de cuisson 3. Dans l'exemple illustré, il est prévu trois sondes de température 31 opérationnelles, qui fournissent trois mesures de températures T1, T2, T3 en des points distincts, et un module 32 d'extension à un nombre supplémentaire de sondes de température.

De manière optionnelle, le boîtier de contrôle 25 peut être encore relié à d'autres capteurs, en particulier
- au moins un capteur d'ouverture de four 33, pour la détection d'ouverture d'un four appartenant à la série d'appareils de cuisson 3 ;
- un capteur de pression 34, ou un pressostat différentiel, placé dans la cuisine 2, pour la mesure de la dépression à l'intérieur de la cuisine 2.

Dans le cas d'appareils de cuisson 3 à gaz, le boîtier de contrôle 25 est avantageusement relié encore à une électrovanne 35 placée sur l'arrivée de gaz.

Le fonctionnement d'ensemble du dispositif de régulation, constitué comme il vient d'être décrit, est le suivant :

A l'arrivée du cuisinier, par exemple le matin, le dispositif est mis en route par une action manuelle sur le boîtier de commande 30. Les moteurs électriques 11, 17 et 24 sont alors mis en marche, avec une vitesse de rotation maximale, pendant un temps donné et quels que soient la position de la commande et les autres paramètres. Les débits d'air d'extraction, d'induction et d'insufflation sont alors maximaux. Puis les vitesses des moteurs 11, 17 et 24, donc les débits d'air correspondants, suivent la consigne donnée par le boîtier de commande 30, et s'adaptent à une température moyenne donnée par un premier calcul, automatiquement effectué dans l'automate 26 à partir des mesures fournies par les différentes sondes de température 31.

Dès la mise en marche de la ventilation, l'automate 26 commande aussi automatiquement l'ouverture de l'électrovanne 35, pour autoriser l'arrivée de gaz et permettre ainsi la mise en marche des appareils de cuisson 3 à gaz par le cuisinier.

Après cette procédure de mise en route, l'automate 26 calcule en permanence la valeur moyenne Tm des températures T1, T2, T3 mesurées par les différentes sondes 31, et l'écart-type de ces températures T1, T2, T3. Plus la température moyenne Tm calculée augmente, plus le débit d'extraction D1, donné par la vitesse du moteur 11, augmentera aussi. Les débits d'air d'induction D2 et d'insufflation D3 sont asservis simultanément, par contrôle de la vitesse des moteurs respectifs 17 et 24.

Si l'écart-type des températures mesurées T1, T2, T3 est supérieur à une certaine valeur de seuil préétablie, ou si le capteur d'ouverture de four 33 ou le capteur de pression 34 est déclenché, l'automate 26 envoie un ordre de ventilation maximum, c'est-à-dire qu'il commande le fonctionnement des trois moteurs 11, 17 et 24 à leur vitesse maximum. Ainsi, le système réagit à une variation brusque de l'une des températures mesurées, ou à un dégagement brusque de vapeur résultant de l'ouverture du four, ou encore à une ouverture de porte ou de fenêtre de la cuisine 2, qui comporteraient des risques de refoulement de vapeurs et d'odeurs, par exemple vers une salle de restaurant attenante à la cuisine 2.

Un tel ordre de ventilation maximum est maintenu aussi longtemps que l'écart-type des températures mesurées dépasse la valeur de seuil fixée, ou que les capteurs 33 ou 34 sont déclenchés, avec une durée minimum préétablie de maintien de la ventilation maximum. Ensuite, le retour des différents débits d'air à leur valeur initiale de consigne, éventuellement modifiée par l'évolution de la température moyenne Tm en fonction de nouvelles mesures, se fait progressivement.

En cas d'incendie, le fonctionnement du dispositif, décrit ci-dessus, est automatiquement neutralisé afin de permettre le pilotage de la ventilation par le système de sécurité de la cuisine 2 (ici non décrit), pour un désenfumage adapté.

Selon les options prévues sur le boîtier de commande déporté 30, la ventilation peut aussi être pilotée manuellement, à tout moment.

Dans l'exemple de réalisation et de fonctionnement décrit jusqu'ici, en référence aux figures 1 et 2, il a été supposé que le dispositif régule simultanément des débits d'air d'extraction, d'air d'induction et d'air d'insufflation déplacés par des unités motorisées distinctes, donc par trois unités motorisées. Comme l'illustre la figure 3, l'invention est aussi applicable à une hotte de cuisine 4 comportant, comme précédemment, un plénum ou caisson d'aspiration 6, mais dans laquelle les caissons d'induction et d'insufflation sont confondus en un plénum ou caisson commun 36. Dans ce cas, l'automate 26 pilote d'une part le débit d'air d'extraction D1, et d'autre part un débit d'air D4, insufflé dans le plénum ou caisson 36, qui est la somme du débit d'air d'induction et du débit d'air d'insufflation.

Plus généralement, le dispositif de régulation de ventilation, objet de l'invention, régule dans tous les cas au moins le débit d'air d'extraction, mais les fonctions de régulation des débits d'air d'induction et/ou d'air d'insufflation restent optionnelles.

L'on ne s'éloignerait pas du cadre de l'invention, telle que définie dans les revendications annexées :
- en modifiant le nombre des capteurs de température, ainsi que leur répartition spatiale ;
- en calculant et en exploitant toute fonction appropriée des températures mesurées, par exemple une moyenne pondérée par des coefficients au lieu d'une simple moyenne arithmétique ;
- en ajoutant d'autres capteurs, de type quelconque ;
- en adaptant les organes de régulation, en particulier les variateurs de vitesse, au type de moteurs électriques utilisés, notamment monophasés ou triphasés, et en ayant recours à toutes techniques connues de modulation de vitesse de ces moteurs : variation de tension, hachage de phases, trains d'ondes, etc...
- en destinant le dispositif à des hottes de cuisine de configuration autre que les exemples illustrés, voire à des plafonds filtrants, et avec toute localisation des groupes moto-ventilateurs ;
- en adaptant ce dispositif à des configurations de ventilation différentes, par exemple avec un plénum ou caisson d'insufflation séparé de la hotte, et situé sous le plafond de la cuisine concernée ;
- en destinant ce dispositif à des cuisines équipées d'appareils de cuisson de tout type et en nombre quelconque, pouvant utiliser toutes énergies de chauffage.

## Revendications

1. Procédé pour la régulation de la ventilation de cuisines professionnelles, avec pilotage d'un débit d'air d'extraction (D1), et le cas échéant d'un débit d'air d'induction (D2) et/ou d'un débit d'air d'insufflation (D3), le ou chaque débit d'air (D1, D2, D3) étant déplacé par un ventilateur (10, 23, 16) entraîné en rotation par un moteur électrique (11, 17, 24) à vitesse de rotation variable, **caractérisé en ce que** plusieurs mesures de température (T1, T2, T3) sont effectuées, à proximité des appareils de cuisson (3) de la cuisine (2) concernée, **en ce qu'**au moins une valeur résultante (Tm) de l'ensemble des températures mesurées (T1, T2, T3) est calculée, et **en ce que** la vitesse de rotation (V) du ou des moteurs électriques (11, 17, 24) d'entraînement du ou des ventilateurs (10, 16, 23) est automatiquement réglée en fonction de la valeur résultante (Tm) calculée.

2. Procédé selon la revendication 1, **caractérisé en ce que** la valeur résultante calculée, et prise en compte pour la régulation de la vitesse (V) du ou des moteurs électriques (11, 17, 24) d'entraînement du ou des ventilateurs (10, 16, 23), est la valeur moyenne (Tm) des températures mesurées (T1, T2, T3).

3. Procédé selon la revendication 1 ou 2, **caractérisé en ce que** l'écart-type des températures mesurées (T1, T2, T3) est aussi calculé, **en ce que** cet écart-type est comparé avec une valeur de seuil préétablie, et **en ce que**, lorsque l'écart-type calculé est supérieur à la valeur de seuil, le ou les moteurs électriques (11, 17, 24) d'entraînement du ou des ventilateurs (10, 16, 23) sont commandés à leur vitesse de rotation maximum, cette commande de ventilation maximum étant maintenue pendant une durée minimum préétablie.

4. Procédé selon la revendication 3, **caractérisée en ce que** l'on détecte aussi l'ouverture d'au moins un four, faisant partie des appareils de cuisson (3), et/ou la différence de pression entre l'extérieur et l'intérieur de la cuisine (2) concernée, et **en ce que** le ou les moteurs électriques (11, 17, 24) d'entraînement du ou des ventilateurs (10, 16, 23) sont aussi commandés à leur vitesse de rotation maximum, pendant la durée minimum préétablie, en cas de détection d'une ouverture de four et/ou d'une pression d'air excessive dans la cuisine (2).

5. ― Procédé selon l'une quelconque des revendications 1 à 4, **caractérisé en ce que**, à la mise en route du système de ventilation de la cuisine (2) concernée, le ou les moteurs électriques (11, 17, 24) d'entraînement du ou des ventilateurs (10, 16, 23) sont automatiquement commandés à leur vitesse de rotation maximum, cette commande de ventilation maximum étant maintenue pendant une durée préétablie.

6. Dispositif pour la régulation de la ventilation de cuisines professionnelles, pour la mise en oeuvre du procédé selon l'une quelconque des revendications 1 à 5, **caractérisé en ce qu'**il comprend une unité de contrôle (25) incluant, d'une part, un automate (26) possédant des entrées reliées à une pluralité de sondes de température (31) placées à proximité des appareils de cuisson (3) de la cuisine (2) concernée, l'automate (26) étant prévu pour calculer une valeur résultante, telle que la valeur moyenne (Tm), des températures (T1, T2, T3) mesurées par les différentes sondes (31), et d'autre part, pour piloter le ou chaque moteur électrique (11, 17, 24) d'entraînement du ou des ventilateurs (10, 16, 23), un variateur électronique de vitesse (27, 28, 29) recevant une valeur de consigne de vitesse (V) délivrée à une sortie de l'automate (26).

7. Dispositif selon la revendication 6, **caractérisé en ce que** les sondes de température (31) sont placées, à proximité des appareils de cuisson (3), dans la partie inférieure d'une hotte de cuisine (4) surmontant lesdits appareils de cuisson (3).

8. Dispositif selon la revendication 6 ou 7, pour la mise en oeuvre du procédé selon la revendication 3, **caractérisé en ce que** l'automate (26) est prévu pour calculer aussi l'écart-type des températures (T1, T2, T3) mesurées par les différentes sondes (31), pour comparer l'écart-type calculé avec une valeur de seuil préétablie, et pour délivrer une valeur de consigne de vitesse (V) dépendant aussi du résultat de cette comparaison.

9. Dispositif selon l'une quelconque des revendications 6 à 8, pour la mise en oeuvre du procédé selon la revendication 4, **caractérisé en ce que** l'automate (26) possède aussi une entrée reliée à un capteur d'ouverture de four (33), et/ou une entrée reliée à un capteur de pression (34) ou à un pressostat différentiel, placé dans la cuisine (2), l'automate (26) délivrant dans ce cas une valeur de consigne de vitesse (V) qui dépend aussi des signaux issus de ces capteurs additionnels (33, 34).

10. Dispositif selon l'une quelconque des revendications 6 à 9, **caractérisé en ce que** l'automate (26) est relié aussi à un boîtier de commande déporté (30).

11. Dispositif selon l'une quelconque des revendications 6 à 10, **caractérisé en ce que** le ou les variateurs de vitesse (27, 28, 29) de l'unité de contrôle (25), pilotant le ou les moteurs électriques (11, 17, 24), sont des variateurs de tension d'alimentation de ces moteurs.

12. Dispositif selon l'une quelconque des revendications 6 à 11, **caractérisé en ce que** l'unité de contrôle (25) comprend un premier variateur de vitesse (27) pilotant le moteur électrique (11) d'une unité d'extraction d'air (9), un deuxième variateur de vitesse (28) pilotant le moteur électrique (17) d'une unité d'induction d'air (15), et un troisième variateur de vitesse (29) pilotant le moteur électrique (24) d'une unité d'insufflation d'air (22).
